# EUROPEAN PATENT SPECIFICATION

(11) **EP 1 579 154 B1**
(45) Date of publication and mention of the grant of the patent: **23.08.2006**
(21) Application number: 03779745.3
(22) Date of filing: 17.12.2003
(51) Int. Cl.: F24H 3/04

(54) **A PORTABLE, GAS-FIRED HOT-AIR GUN FOR GENERATING A HOT FLOW OF AIR AND AN APPARATUS FOR GENERATING A HOT FLOW OF AIR COMPRISING SUCH HOT-AIR GUN**
TRAGBARE, GASGEFEUERTE HEISSLUFTPISTOLE ZUR ERZEUGUNG EINES HEISSEN LUFTSTROMS UND VORRICHTUNG ZUR ERZEUGUNG EINES HEISSEN LUFTSTROMS MIT SOLCH EINER HEISSLUFTPISTOLE
CANON A AIR CHAUD A GAZ PORTABLE POUR GENERER UN FLUX D'AIR CHAUD, ET APPAREIL POUR GENERER UN FLUX D'AIR CHAUD COMPRENANT UN TEL CANON A AIR CHAUD

(30) Priority: 19.12.2002 DK 200201941
(43) Date of publication of application: 28.09.2005
(73) Proprietor: ICOPAL A/S, 2730 Herlev (DK)
(72) Inventor: THOMSEN, Svend, DK-3000 Helsingor (DK)
(74) Representative: Sundien, Thomas
(86) International application number: PCT/DK2003/000887
(87) International publication number: WO 2004/057243

(56) References cited:
- EP-A1- 0 309 034
- GB-A- 1 166 671
- US-A- 4 666 398
- US-A- 5 476 378

## Description

The invention relates to a portable, gas-fired hot-air gun for generating a hot flow of air, said hot-air gun comprising a housing with an outlet opening for a hot flow of air, said housing being connected to an air supply tube connected via a pipe to the housing interior, and a gas supply tube connected via a pipe to a blast chamber provided within the housing.

The invention also relates to an apparatus for generating a hot flow of air, comprising a hot-air gun with a burning chamber, said hot-air gun being via a flexible air supply tube connected to a blower and via a flexible gas supply tube connected to a container with a pressurized gas.

When for instance bituminous roof material is laid, handheld or portable, gas-fired burners are often used. Conventionally there are two types of such burners, viz the type that sucks in air by itself and the type to which air is supplied. In general the type that sucks in air by itself is of very simple construction, since, normally, it comprises only an open burning chamber to which a gas is conveyed, following which the gas itself causes air to be sucked into the burning chamber via openings provided in the walls of the burning chamber. When this burner has been ignited, a flame will beam out of the burning chamber, unless the gas supply is reduced considerably or a long pipe is mounted at the end of the burning chamber. If an open flame is used the risk of igniting material is increased and therefore, for some uses, the use of open fire has been banned.

Various models of the air-supplied burners or hot-air guns have been developed, wherein the amounts of air and gas are adapted to each other to achieve an optimum combustion with large heat build-up. Within the field concerned by this type of hot-air guns, models have moreover been developed that are configured such that, in normal conditions, the flame does not extend out of the hot-air gun during use. Often this means that the burning chamber as such has a relatively large expanse which makes the hot-air gun unwieldy.

Such air-supplied hot-air gun for generating a hot flow of air is known from eg WO 02/079700 that shows precisely a hot-air gun with a comparatively long burning chamber that is provided after a mixing chamber for gas and air. This hot-air gun comprises a housing that is, via a flexible air supply tube, connected to a blower arranged on a carriage. Moreover a gas cylinder is provided that contains a liquid pressurized gas, such as eg butane or propane or a mixture thereof. A gas supply tube and electric wires are conveyed through the comparatively thick air supply tube to the portable hot-air gun as such.

In use, the air as well as the gas supply to the hot-air gun is opened. When the correct mixing ratio of air to gas is accomplished within the burning chamber, the mixture is ignited in the burning chamber by means of a spark igniter in a commonly known manner. Despite its advantages the heating capacity of the hot-air gun shown in WO 02/079700 is strictly limited, if it is not to be excessively large and cumbersome to handle. Therefore there continues to exist a desire to develop a portable hot-air gun which is smaller and more user friendly and is able to produce a higher yield.

Document US-A-5 476 378 shows another portable gas-fired hot-air gun.

It is therefore the object of the invention to provide a hot-air gun for generating a hot flow of air, which hot-air gun must be able to supply the required yield while simultaneously it is smaller and handier than the known hot-air guns of this type.

This is accomplished by configuring the hot-air gun described in the aforementioned in such a manner that the burning chamber is delimited by an outer cylindrical wall and an inner cylindrical wall arranged concentrically in relation to each other, and that are both provided with air supply apertures, and an annular end wall opposite the discharge opening of the housing, said annular end wall connecting the outer cylindrical wall to the inner cylindrical wall.

Hereby a hot-air gun is provided that has an annular burning chamber with air supply from both the outside and the inside, which has surprisingly been found to yield a very effective combustion of the supplied gas in a comparatively small burning chamber, and that is without the flame extending out of the burning chamber. Since a very efficient combustion is accomplished in a comparatively small burning chamber, the hot-air gun as such can be very light and user-friendly.

The gas to be combusted in the burning chamber as such is preferably supplied through the annular end wall, which is provided with gas supply openings that are connected via a pipe to the gas supply tube. Hereby the gas is supplied at the bottom of the burning chamber so far away from the discharge opening of the hot-air gun that the entire axial expanse of the burning chamber can be utilized for combusting the gas.

According to a particularly advantageous embodiment the annular end wall comprises an annular chamber which is connected by pipe to the gas supply tube, and the gas supply openings extend evenly distributed from the annular chamber to the burning chamber. Hereby a distribution of the supplied gas to the entire wall is accomplished, and it may be introduced evenly distributed in the burning chamber, whereby optimal utilisation of the cavity of the burning chamber can be accomplished.

In order to exploit the flow of air to a maximum, both the outer cylindrical wall and the inner cylindrical wall is closed off in relation to the housing at the end opposite the annular ring wall. Hereby all the supplied air is forced through the burning chamber, thereby ensuring sufficient amounts of oxygen to the combustion and yields an optimal heating of the air.

The outer cylindrical wall may be provided with an inwardly extending end flange at the end opposite the annular end wall in order to hereby delimit the burning chamber and contribute to preventing the flame from extending out of the burning chamber.

In order to ensure sufficient supply of air to the burning chamber, the inwardly extending end flange may be provided with air supply apertures.

For ignition of the mixture of air/gas an electrode is preferably arranged that extends into the burning chamber.

The apparatus mentioned above for generating a hot flow of air is characterised in being provided with a hot-air gun configured as taught above.

The invention will now be explained in further detail with reference to the drawing; wherein
Figure 1 schematically shows a drawing of an apparatus for generating a hot flow of air, wherein a hot-air gun according to the invention partakes;
Figure 2 is a cross-sectional view of a preferred embodiment of a hot-air gun according to the invention; and
Figure 3 is a cross-sectional, perspective view of a preferred embodiment of the burning chamber as such in a hot-air gun according to the invention.

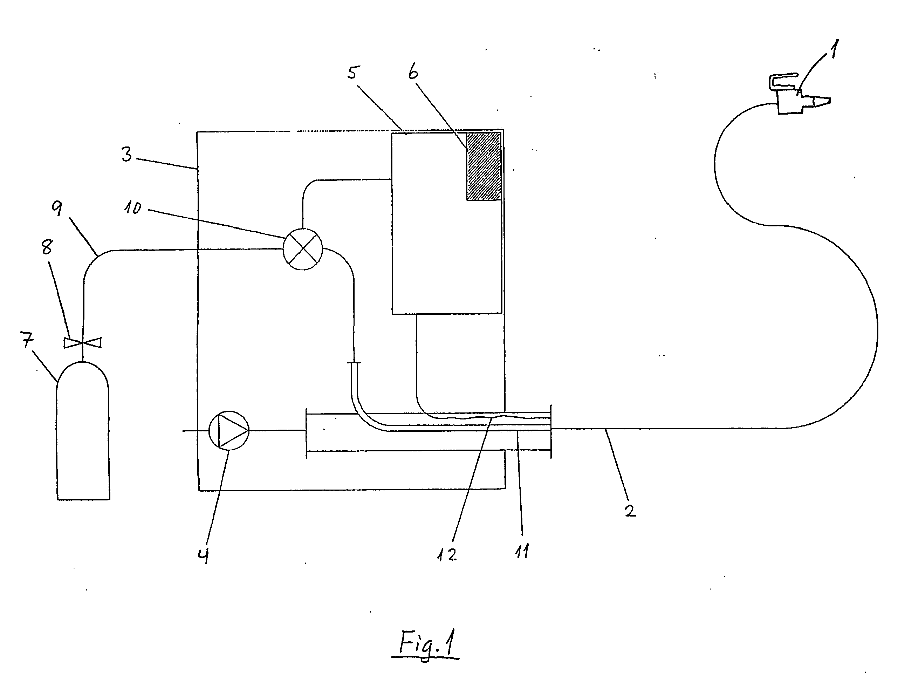

Figure 1 schematically shows a drawing of an apparatus for generating a hot flow of air, eg for heating bituminous roof material. The apparatus comprises a hot-air gun 1 that is, via a flexible air-supply tube 2, connected to a mobile station 3. In the mobile station 3 a blower 4 is provided that feeds the ambient air to the air supply tube 2 and from there on to the hot-air gun 1. The blower 4 is driven by an electromotor, not shown in further detail herein, that maybe be eg a 24 V DC motor, enabling it to be driven by a 24 V battery. The mobile station 3 is provided with an electronic control unit 5 with means for controlling the supply of gas, air as well as current to the hot-air gun 1. A power supply unit, such as a battery 6, is configured in connection with the electronic control unit 5.

A gas container 7, such as a gas cylinder, with a control valve 8 is arranged externally of the mobile station 3 and is connected to same via a flexible gas conduit 9 of commonly known type. The mobile station 3 comprises a magnetic valve 10 for opening or closing off the flow of gas from the gas container 7 to the hot-air gun 1. The magnetic valve 10 is controlled by the electronic control unit 5 as will be described below. The magnetic valve 10 is connected to a gas supply tube 11 which is, inside the mobile station 3, directed into the air supply tube 2 and is situated there within entirely to the hot-air gun 1. In a corresponding manner an electrically conductive cable 12 is conveyed from the electronic control unit 5 into the air supply tube 2 and is situated there within entirely to the hot-air gun 1.

Thus, the hot-air gun 1 is connected to the mobile station 3 exclusively via the air-supply tube 2, in which the gas supply tube 11 and the electrically conductive cable 12 are provided. All of the above features are known from the above-referenced WO 02/079700.

Now follows a brief description of the operation of the above-referenced apparatus for generating a hot flow of air. The gas container 7 contains a liquid pressurized gas that comprises a mixture of different combustible gas components, such as butane and/or propane. The gas control valve 8 opens until the desired discharge pressure is accomplished: eg 0.2 bar. Other values can also be selected depending on the need for hot air from the hot-air gun 1. If there is a need for a hotter flow of air, the discharge pressure from the gas cylinder 7 can be set to eg 0.5 or 1 bar.

During start-up, the gas from the gas cylinder 7 is turned on and the blower 4 is started. The rate of the blower 4 is controlled electronically by the control unit 5, to the effect that, at any time and in any situation, optimal mixture of air and gas can be accomplished in the hot-air gun 1. Once a suitable mixture ratio of air to gas is accomplished in the hot-air gun 1, the mixture is ignited in a burning chamber (subject to description below) via an electrode arranged in the burning chamber. Once the gas/air mixture is ignited, both the blower 4 and the control valve 8 in the gas container can be further adjusted for accomplishing the desired output effect from the hot-air gun 1.

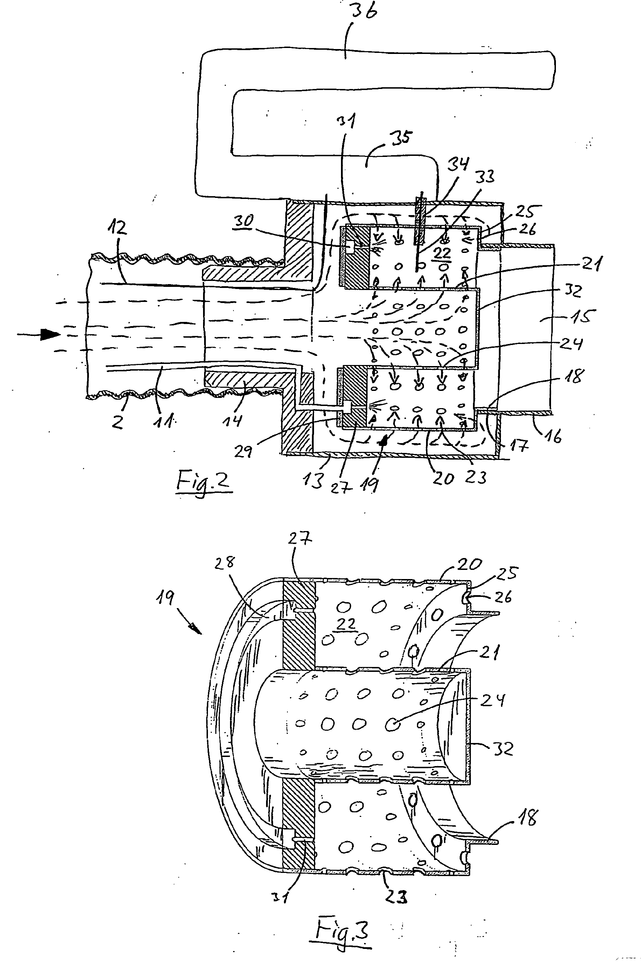

In the following, reference is made to Figure 2 which is a cross-sectional view showing a preferred embodiment of a hot-air gun 1 according to the invention, and to Figure 3 which is a cross-sectional and perspective view of the configuration of the burning chamber as such in the hot-air gun 1,

The hot-air gun 1 comprises an outer housing 13, which is provided with a tube coupling 14 on which the air supply tube 2 is mounted. The outer housing 13 is furthermore provided with a discharge opening 15 for hot air, which discharge opening is provided with a collar 16, on which a mouth piece (not shown) can be mounted as desired. At the discharge opening 15, a rearwardly oriented flange 17 is configured that sealingly abuts on a forwardly oriented flange 18 on a burning chamber unit 19 provided within the housing 13.

The burning chamber unit 19 shown in cross-sectional and perspective view in Figure 3 comprises an outer cylindrical wall 20 and an inner cylindrical wall 21 that are arranged concentrically in relation to each other, to the effect that they delimit an annular burning chamber 22. The outer cylindrical wall 20 is configured with a smaller diameter than the outer housing 13, whereby the air in the outer housing 13 surrounds the entire burning chamber unit 19. Both the outer cylindrical wall 20 and the inner cylindrical wall 21 are provided with air supply apertures 23, 24 that allow air that flows, by means of the blower 4, from the air supply tube 2 into the outer housing 13 to enter the burning chamber 22. This is shown by dotted lines in Figure 2.

In the shown preferred embodiment the outer cylindrical wall 20 is provided with an inwardly extending end flange 25, from where the flange 18 protrudes. Also this end flange 25 is provided with air supply apertures 26 that allow air to flow from the outer housing 13 into the burning chamber 22.

The outer cylindrical wall 20 and the inner cylindrical wall 21 are connected to each other by means of an annular end wall 27. In this annular end wall 27, an annular indentation 28 is provided that combines with a cover 29 to form an annular chamber 30 for distributing the gas supplied. The gas supply tube 11 that extends through the air supply tube 2 from the mobile station 3 to the hot-air gun 1 is connected by a pipe to the annular chamber 30 as shown in Figure 2. At the bottom of the annular indentation 28, gas supply openings 31 are provided, from where the supplied gas can be conveyed under pressure to the burning chamber 22.

The inner cylindrical wall 21 is closed off by an end wall 32 at the end opposite the annular end wall 27, whereby the supplied air is forced into the burning chamber 22.

A bar electrode 33 extends through the outer housing 13 into the burning chamber 22 and is used for the initial ignition of the gas/air mixture. The bar electrode 33 is electrically insulated in relation to the housing and the outer cylindrical wall by means of a ceramic insulator 34 that surrounds the bar electrode 33. The outer end of the bar electrode 33 is connected to a high-voltage device, not shown in further detail herein, that is supplied with current via the electrically conductive cable 12 that extends through the air supply tube 2 from the mobile station 3 to the hot-air gun 1. The high-voltage device is arranged in a box 35 that is mounted exteriorly on the outer housing 13, and since its construction as such is of no consequence to the present invention and, additionally, it can easily be pointed to by a person skilled in the art, it will not be subject to more detailed description herein.

Exteriorly on the outer housing 13, a handle 36 is also provided which enables easy handling of the hot-air gun 1 in use.

Constructing the hot-air gun 1 with an annular burning chamber 22 has been found to enable a very efficient combustion with large heat build-up in a very small area, and that is without the flame extending beyond the burning chamber 22. Tests have shown that by use of a burning chamber having an outer diameter of about 70 mm and an axial length of about 50 mm, it is possible to accomplish large variations in the effect, ranging from 2 kW to at least 100 kW without modification to the hot-air gun 1, but rather by a mere adjustment of the gas and air supply. It has been found to be possible to combust as much as 10 kg gas/hour. Once again it should be emphasized that it is possible to accomplish performance values like that without any flame being visible outside the burning chamber 22 as such.

The performance values given above will be entirely sufficient in most cases; and the burning chamber having a modest size, it is possible to construct a heat gun that is comparatively light and small and hence extremely handy.

## Claims

1. A portable gas-fired hot-air gun (1) for generating a hot flow of air, said hot-air gun (1) comprising a housing (13) with a discharge opening (15) for a hot flow of air, which housing (13) is connected to an air supply tube (2) connected by means of a pipe to the housing interior; and a gas supply tube (11) connected by pipe to a burning chamber (22) provided within the housing (13), **characterised in that** the burning chamber (22) is delimited by an outer cylindrical wall (20) and an inner cylindrical wall (21) arranged concentrically in relation to each other and which are both provided with air supply apertures (23, 24) and an annular end wall (27) opposite the discharge opening (15) of the housing, said annular end wall (27) connecting the outer cylindrical wall (20) to the inner cylindrical wall (21).

2. A hot-air gun according to claim 1, **characterised in that** the annular end wall (27) is provided with gas supply openings (31) that are connected by pipe to the gas supply tube (11).

3. A hot-air gun according to claim 2, **characterised in that** the annular end wall (27) comprises an annular chamber (30) which is connected by pipe to the gas supply tube (11); and that the gas supply openings (31) extend evenly distributed from the annular chamber (30) to the burning chamber (22).

4. A hot-air gun according to any one of claims 1-3, **characterised in that** the outer cylindrical wall (20) is closed off in relation to the housing (13) at the end opposite the annular end wall (27).

5. A hot-air gun according to any one of claims 1-4, **characterised in that** the inner cylindrical wall (21) is closed off at the end opposite the annular end wall (27).

6. A hot-air gun according to any one of claims 1-5, **characterised in that** the outer cylindrical wall (20) is provided with an inwardly extending end flange (25) at the end opposite the annular end wall (27).

7. A hot-air gun according to claim 6, **characterised in that** the inwardly extending end flange (25) is provided with air supply apertures (26).

8. A hot-air gun according to any one of claims 1-7, **characterised in that** an electrode (33) for igniting a gas/air mixture protrudes into the burning chamber (22).

9. An apparatus for generating a hot flow of air, comprising a hot-air gun (1) with a burning chamber (22), which hot-air gun (1) is, via a flexible air supply tube (2), connected to a blower (4) and via a flexible gas supply tube (11) it is connected to a container (7) with a pressurized gas, **characterised in that** the hot-air gun (1) is configured as featured in any one of claims 1-8.

## Patentansprüche

1. Tragbare gasgefeuerte Heißluftpistole (1) zur Erzeugung eines heißen Luftstroms, wobei die Heißluftpistole (1) ein Gehäuse (13) mit einer Austrittsöffnung (15) für einen heißen Luftstrom umfasst, welches Gehäuse (13) verbunden ist mit einer Luftzuführungsröhre (2), die mittels eines Rohrs an das Gehäuseinnere angeschlossen ist; und einer Gaszuführungsröhre (11), die mittels Rohr an eine Brennkammer (22) angeschlossen ist, die in dem Gehäuse (13) vorgesehen ist, **dadurch gekennzeichnet, dass** die Brennkammer (22) begrenzt ist durch eine äußere zylindrische Wand (20) und eine innere zylindrische Wand (21), die in Bezug zueinander konzentrisch angeordnet sind und die beide mit Luftzuführungsöffnungen (23, 24) versehen sind, und eine ringförmige Endwand (27) gegenüber der Austrittsöffnung (15) des Gehäuses, wobei die ringförmige Endwand (27) die äußere zylindrische Wand (20) mit der inneren zylindrischen Wand (21) verbindet.

2. Heißluftpistole nach Anspruch 1, **dadurch gekennzeichnet, dass** die ringförmige Endwand (27) mit Gaszuführungsöffnungen (31) versehen ist, welche mittels Rohr mit der Gaszuführunrisröhre (11) verbunden sind.

3. Heißluftpistole nach Anspruch 2, **dadurch gekennzeichnet, dass** die ringförmige Endwand (27) eine ringförmige Kammer (30) umfasst, welche mittels Rohr mit der Gaszuführungsröhre (11) verbunden ist; und **dass** die Gaszuführungsöffnungen (31) sich gleichmäßig verteilt von der ringförmigen Kammer (30) zu der Brennkammer (22) erstrecken.

4. Heißluftpistole nach einem der Ansprüche 1-3, **dadurch gekennzeichnet, dass** die äußere zylindrische Wand (20) abgeschlossen wird in Bezug auf das Gehäuse (13) an dem Ende gegenüber der ringförmigen Endwand (27).

5. Heißluftpistole nach einem der Ansprüche 1-4, **dadurch gekennzeichnet, dass** die innere zylindrische Wand (21) abgeschlossen wird an dem Ende gegenüber der ringförmigen Endwand (27).

6. Heißluftpistole nach einem der Ansprüche 1-5, **dadurch gekennzeichnet, dass** die äußere zylindrische Wand (20) mit einem sich nach innen erstreckenden Endflansch (25) versehen ist an dem Ende gegenüber der ringförmigen Endwand (27).

7. Heißluftpistole nach Anspruch 6, **dadurch gekennzeichnet, dass** der sich nach innen erstreckende Endflansch (25) mit Luftzuführungsöffnungen (26) versehen ist.

8. Heißluftpistole nach einem der Ansprüche 1-7, **dadurch gekennzeichnet, dass** eine Elektrode (33) zum Zünden eines Gas/Luft-Gemisches in die Brennkammer (22) vorragt.

9. Vorrichtung zur Erzeugung eines heißen Luftstroms, umfassend eine Heißluftpistole (1) mit einer Brennkammer (22), welche Heißluftpistole (1), via eine flexible Luftzuführungsröhre (2), mit einem Gebläse (4) verbunden ist, und via eine flexible Gaszuführungsröhre (11) ist sie mit einem Behälter (7) mit einem Druckgas verbunden, **dadurch gekennzeichnet, dass** die Heißluftpistole (1) ausgeführt ist, wie in einem der Ansprüche 1-8 dargelegt.

## Revendications

1. Canon à air chaud à gaz portable (1) pour produire un flux d'air chaud, ledit canon à air chaud (1) comprenant un boîtier (13) avec une ouverture d'évacuation (15) pour un flux d'air chaud, ledit boîtier (13) étant relié à un tube d'amenée d'air (2) relié au moyen d'un tuyau à l'intérieur du boîtier ; et un tube d'amenée de gaz (11) relié par le tuyau à une chambre de combustion (22) réalisée dans le boîtier (13), **caractérisé en ce que** la chambre de combustion (22) est délimitée par une paroi cylindrique externe (20) et une paroi cylindrique interne (21) agencées concentriquement l'une relativement à l'autre et qui présentent toutes les deux des ouvertures d'amenée d'air (23, 24) et une paroi d'extrémité annulaire (27) opposée à l'ouverture d'évacuation (15) du boîtier, ladite paroi d'extrémité annulaire (27) reliant la paroi cylindrique externe (20) à la paroi cylindrique interne (21).

2. Canon à air chaud selon la revendication 1, **caractérisé en ce que** la paroi d'extrémité annulaire (27) présente des ouvertures d'amenée de gaz (31) qui sont reliées par un tuyau au tube d'amenée de gaz (11).

3. Canon à air chaud selon la revendication 2, **caractérisé en ce que** la paroi d'extrémité annulaire (27) comprend une chambre annulaire (30) qui est reliée par le tuyau au tube d'amenée de gaz (11) ; et **en ce que** les ouvertures d'amenée de gaz (31) s'étendent, en étant distribuées uniformément, de la chambre annulaire (30) à la chambre de combustion (22).

4. Canon à air chaud selon l'une des revendications 1 à 3, **caractérisé en ce que** la paroi cylindrique externe (20) est fermée relativement au boîtier (13) à l'extrémité opposée à la paroi d'extrémité annulaire (27).

5. Canon à air chaud selon l'une des revendications 1 à 4, **caractérisé en ce que** la paroi cylindrique interne (21) est fermée à l'extrémité opposée à la paroi d'extrémité annulaire (27).

6. Canon à air chaud selon l'une des revendications 1 à 5, **caractérisé en ce que** la paroi cylindrique externe (20) présente une bride d'extrémité (25) s'étendant vers l'intérieur à extrémité opposée à la paroi d'extrémité annulaire (27).

7. Canon à air chaud selon la revendication 6, **caractérisé en ce que** la bride d'extrémité (25) s'étendant vers l'intérieur présente des ouvertures d'amenée d'air (26).

8. Canon à air chaud selon l'une des revendications 1 à 7, **caractérisé en ce qu'**une électrode (33) pour l'allumage d'un mélange gaz/air fait saillie dans la chambre de combustion (22).

9. Appareil pour produire un flux d'air chaud, comprenant un canon à air chaud (1) avec une chambre de combustion (22), ledit canon à air chaud (1) est relié, par un tube d'amenée d'air flexible (2), à une soufflante (4) et par un tube d'amenée de gaz flexible (11), il est relié à un contenant (7) de gaz comprimé, **caractérisé en ce que** le canon à air chaud (1) est configuré comme indiqué dans l'une des revendications 1 à 8.
